# EUROPEAN PATENT SPECIFICATION

(11) **EP 3 658 593 B1**
(45) Date of publication and mention of the grant of the patent: **07.07.2021**
(21) Application number: 18746766.7
(22) Date of filing: 25.07.2018
(51) Int. Cl.: C08F 136/06, C08L 9/00

(54) **PROCESS FOR THE PREPARATION OF 1,2 SYNDIOTACTIC POLYBUTADIENE IN THE PRESENCE OF A CATALYTIC SYSTEM COMPRISING A COBALT COMPLEX WITH A PHOSPHINE LIGAND**
VERFAHREN ZUR HERSTELLUNG VON 1,2 SYNDIOTAKTISCHEM POLYBUTADIEN IN GEGENWART EINES KATALYTISCHEN SYSTEMS, DAS EINEN KOBALTKOMPLEX MIT EINEM PHOSPHINLIGANDEN ENTHÄLT
PROCÉDÉ DE PRÉPARATION DE 1,2-POLYBUTADIÈNE SYNDIOTACTIQUE EN PRÉSENCE D'UN SYSTÈME CATALYTIQUE COMPRENANT UN COMPLEXE DE COBALT AVEC UN LIGAND PHOSPHINE

(30) Priority: 26.07.2017 IT 201700085384
(43) Date of publication of application: 03.06.2020
(73) Proprietor: Versalis S.p.A., 20097 San Donato Milanese (MI) (IT)
(72) Inventor: SOMMAZZI, Anna, I-28060 Novara (IT); RICCI, Giovanni, I - 43126 Parma (IT); FISCALETTI, Giuliano, I - 41019 Soliera (MO) (IT); MASI, Francesco, I - 26866 Sant'Angelo Lodigiano (LO) (IT); LEONE, Giuseppe, I -20133 Milano (IT)
(74) Representative: Cernuzzi, Daniele
(86) International application number: PCT/IB2018/055530
(87) International publication number: WO 2019/021195

(56) References cited:
- WO-A1-03/018649
- WO-A1-2016/042014
- US-A- 4 182 813
- RICCI G ET AL: "Synthesis, structure and butadiene polymerization behavior of CoCl"2(PR"xPh"3"-"x)"2 (R=methyl, ethyl, propyl, allyl, isopropyl, cyclohexyl; x=1, 2). Influence of the phosphorous ligand on polymerization stereoselectivity", JOURNAL OF ORGANOMETALLIC CHEMIS, ELSEVIER-SEQUOIA S.A. LAUSANNE, CH, vol. 690, no. 7, 30 March 2005 (2005-03-30), pages 1845-1854, XP004809284, ISSN: 0022-328X, DOI: 10.1016/J.JORGANCHEM.2005.02.012

## Description

The present invention relates to a process for the preparation of 1,2 syndiotactic polybutadiene.

More in particular, the present invention relates to a process for the preparation of 1,2 syndiotactic polybutadiene comprising polymerizing 1,3-butadiene in the presence of a catalytic system comprising: at least one cobalt complex with a phosphine ligand selected from high sterically hindered aromatic phosphines; at least one aluminoxane; said process being carried out at a temperature greater than or equal to 0°C.

it is a further subject matter of the present invention is a cobalt complex with a phosphine ligand selected from high sterically hindered aromatic phosphines having general formula (I) reported below.

It is known that the stereospecific (co)polymerization of conjugated dienes is a very important process in the chemical industry in order to obtain products that are among the most widely used rubbers.

It is also known that among the different polymers that can be obtained from the stereospecific polymerization of 1,3-butadiene (i.e. 1,4-*cis*, 1,4*-trans,* 1,2 syndiotactic, 1,2 isotactic, 1,2 atactic, mixed structure 1,4-*cis*/1,2 having a variable 1,2 unit content), only 1,4-*cis* polybutadiene and 1,2 syndiotactic polybutadiene are industrially commercialized products. Further details on said polymers can be found, for example, in: Takeuchi Y. et al., "New Industrial Polymers", "American Chemical Society Symposium Series" (1974), Vol. 4, pp. 15-25; Halasa A. F. et al., "Kirk-Othmer Encyclopedia of Chemical Technology" (1989), 4th Ed., Kroschwitz J. I. Ed., John Wiley and Sons, New York, Vol. 8, pp. 1031-1045; Tate D. et al., "Encyclopedia of Polymer Science and Engineering (1989), 2nd Ed., Mark H. F. Ed., John Wiley and Sons, New York, Vol. 2, pp. 537-590; Kerns M. et al., "Butadiene Polymers", in "Encyclopedia of Polymer Science and Technology" (2003), Mark H. F. Ed., Wiley, Vol. 5, pp. 317-356.

Generally, 1,4-*cis* polybutadiene is prepared through polymerization processes that use different catalytic systems comprising catalysts based on titanium (Ti), cobalt (Co), nickel (Ni), neodymium (Nd). Catalytic systems comprising cobalt based catalysts have high catalytic activity and stereospecificity and can be considered the most versatile of those mentioned above since, when their formulation is changed, they are able to provide all the possible stereoisomers of polybutadiene mentioned above, as described, for example, in: Porri L. et al., "Comprehensive Polymer Science" (1989), Eastmond G.C. et al. Eds., Pergamon Press, Oxford, UK, Vol. 4, Part II, pp. 53-108; Thiele S. K. H. et al., "Macromolecular Science. Part C: Polymer Reviews" (2003), C43, pp. 581-628; Osakada, K. et al., "Advanced Polymer Science" (2004), Vol. 171, pp. 137-194; Friebe L. et al., "Advanced Polymer Science" (2006), Vol. 204, pp. 1-154.

1,2 syndiotactic polybutadiene is a crystalline, not very water soluble, polymer, with a variable melting point, ranging from 200°C to 220°C, according to the degree of syndiotacticity (i.e. the percentage of syndiotactic triads) and, generally, it is used for manufacturing transparent films, tubes, but the main use is that of manufacturing shoe soles.

1,2 syndiotactic polybutadiene can be obtained through the polymerization of 1,3-butadiene in the presence of different types of catalytic systems as described, for example, in Porri L. et al., "Comprehensive Polymer Science" (1989), Eastmond G.C. et al. Eds., Pergamon Press, Oxford, UK, Vol. 4, Part II, pp. 53-108, reported above.

Among said catalytic systems, the following ones can be mentioned: catalytic systems comprising titanium complexes [e.g., Al(R)₃-Ti(OR)₄, polymerization carried out in heptane, at 0°C-15°C)] as described, for example, in Natta G. et al., in Italian patent application IT 538453; catalytic systems comprising vanadium complexes [e.g., AlEt₃-V(acac)₃, polymerization carried out in benzene at 15°C] as described, for example, in Natta G. et al., "La Chimica e l'Industria" (1959), Year 41, pp. 526; catalytic systems comprising molybdenum complexes (e.g., AlR₃-Mo(acac)₃, polymerization in benzene at 15°C) as described, for example, in Porri L. et al., "Comprehensive Polymer Science" (1989), Eastmond G.C. et al. Eds., Pergamon Press, Oxford, UK, Vol. 4, Part II, pp. 53-108, reported above; catalytic systems comprising chromium complexes [e.g., Cr(CNPh)₆-AlEt₃ with a low Al/Cr ratio, polymerization carried out in benzene, at 15°C] as described, for example, in Natta G. et al., "La Chimica e l'Industria" (1959), Year 41, pp. 1163; catalytic systems comprising chromium complexes [e.g., CrCl₂(dmpe)₂-MAO] as described, for example, in Ricci G. et al., "Macromolecules" (2001), Vol. 34(17), pp. 5766-5769.

Catalytic systems comprising cobalt complexes are however those that have up to now permitted 1,2 syndiotactic polybutadiene with higher stereoregularity to be obtained, at the same time also allowing the maximum level of catalytic activity.

For example, 1,2 syndiotactic polybutadiene with high crystallinity having a 1,2 unit content equal to 99.7%, a degree of syndiotacticity equal to 99.6% and a melting point of 208°C, was obtained using the catalytic system Co(III) (acetylacetonate)/triethyl aluminum carbon disulfide [Co(acac)₃-AlEt₃-CS₂] as described, for example, in Ashitaka H. et al., "Journal of Polymer Science Part A: Polymer Chemistry" (1983), Vol. 21, Issue 6, pp. 1853-1860. Other catalytic systems comprising cobalt and carbon disulfide (CS₂) able to produce 1,2 syndiotactic polybutadiene with high crystallinity having a 1,2 unit content > 99%, a degree of syndiotacticity > 99% and a melting point > 200°C, up to 216°C, are also described in: Ashitaka H. et al., "Journal of Polymer Science Part A: Polymer Chemistry" (1983), Vol. 21, Issue 7, pp. 1951-1972; Ashitaka H. et al., "Journal of Polymer Science Part A: Polymer Chemistry" (1983), Vol. 21, Issue 7, pp. 1973-1988; Ashitaka H. et al., "Journal of Polymer Science Part A: Polymer Chemistry" (1983), Vol. 21, Issue 7, pp. 1989-1995.

The aforementioned catalytic systems comprising cobalt and carbon disulfide (CS₂), are by far the most active and stereospecific among those reported for the synthesis of 1,2 syndiotactic polybutadiene.

Another very active and stereospecific catalytic system for the preparation 1,2 syndiotactic polybutadiene can be obtained from the combination of the cobalt allyl complex (η⁴-C₄H₆)(η⁵-C₈H₁₃)Co described, for example, in Natta G. et al., "Chemical Communications" (1967), Issue 24, pp. 1263-1265, with carbon disulfide (CS₂), as described, for example, in Ricci G. et al., "Polymer Communication" (1988), Vol. 29, pp. 305-307. Said cobalt allyl complex alone is able to dimerize 1,3-butadiene at ambient temperature as described, for example, in american patent US 5,879,805, but is also able to provide 1,2 syndiotactic polybutadiene operating only at low temperatures (-30°C) as described, for example, in Ricci G. et al., "Polymer Communication" (1988), Vol. 29, pp. 305-307, reported above.

Polybutadienes with a 1,2 syndiotactic or mixed *cis*-1,4/1,2 structure having the 1,4-*cis* and 1,2 units with a random distribution along the polymer chain, can also be produced using the catalytic systems obtained through the combination of cobalt dichloride (CoCl₂) or cobalt dibromide (CoBr₂) with organic aluminum compounds (e.g., alkylaluminum compounds or aluminoxanes), in the presence of phosphines (e.g., triphenylphosphine) as described, for example, in the following american patents: US 5,879,805, US 4,324,939, US 3,966,697, US 4,285,833, US 3,498,963, US 3,522,332, US 4,182,813, US 5,548,045, US 7,009,013.

Further details related to the polymerization of 1,3-butadiene with catalytic systems comprising preformed cobalt complexes with different phosphines, are reported, for example, in italian patents IT 1,349,141, IT 1,349,142, IT 1,349,143, and in international patent application WO 2003/018649. The use of different phosphines comes from the fact that it is well known how the steric and electronic properties of phosphines depend strongly on the type of substituents on the phosphorus atom as described, for example, in: Dierkes P. et al., "Journal of Chemical Society, Dalton Transactions" (1999), pp. 1519-1530; van Leeuwen P. et al., "Chemical Reviews" (2000), Vol. 100, pp. 2741-2769; Freixa Z. et al., "Dalton Transactions" (2003), pp. 1890-1901; Tolman C., "Chemical Reviews" (1977), Vol. 77, pp. 313-348.

The documents related to the use phosphines reported above, show how the use of preformed cobalt phosphine complexes in combination with methylaluminoxane (MAO) is able to allow the microstructure of polybutadiene to be managed so as to obtain polybutadienes with a different structure according to the type of phosphine coordinated to the cobalt atom.

The stereospecific polymerization of 1,3-butadiene with catalytic systems comprising cobalt complexes with hindered monodentate aliphatic phosphines (e.g., P*^{t}*Bu₃, P*ⁱ*Pr₃, P*^{t}*Bu₂*ⁱ*Pr, P*^{t}*Bu₂Me, P*ⁱ*Bu₂Cy, P*ⁱ*BuCy₂, PCy₃, PCyp₃ wherein P = phosphorus, *^{t}*Bu = *tert-*butyl, *ⁱ*Pr = *iso*-propyl, Cy = cyclohexyl and Cyp = cyclopentyl), provides polybutadienes with a prevalently 1,4-*cis* structure, whereas polybutadienes having a mixed 1,4-*cis*/1,2 structure were obtained using catalytic systems comprising cobalt complexes with less sterically-hindered phosphines (e.g., PCy₂H; P*^{t}*Bu₂H; PEt₃; P*ⁿ*Pr₃ wherein P = phosphorus, Cy = cyclohexyl, *^{t}*Bu = *tert*-butyl, Et = ethyl and *ⁿ*Pr = *n*-propyl), as described, for example, in international patent application WO 2003/1018649.

Polybutadienes with a high 1,4-*cis* unit content (≥ 96%) were obtained with catalytic systems comprising cobalt complexes with bidentate phosphines [e.g., CoCl₂[R₂P(CH₂)ₙPR₂]/MAO, wherein Co = cobalt, Cl = chlorine, R = methyl, ethyl, phenyl, n = 1 or 2, P = phosphorus and MAO = methylaluminoxane), regardless of the type of bidentate phosphine coordinated with the cobalt atom as described, for example, in Ricci G. et al., "Coordination Chemistry Reviews" (2010), Vol. 254, pp. 661-676; Ricci G. et al., "Cobalt: Characteristics, Compounds, and Applications" (2011), Lucas J. Vidmar Ed., Nova Science Publisher, Inc., USA, pp. 39-81.

Catalytic systems comprising cobalt complexes with ligands selected from aromatic phosphines [e.g., CoCl₂(PRPh₂)₂/MAO (wherein Co = cobalt, Cl = chloride, P = phosphorus, R = methyl, *n*-propyl, ethyl, iso-propyl, cyclohexyl, Ph = phenyl, MAO = methylaluminoxane] have instead been shown to be extremely active for the 1,2 polymerization of 1,3-butadiene as described, for example, in Italian patents IT 1,349,142, IT 1,349,143. In fact, using said catalytic systems, polybutadienes were obtained with an essentially 1,2 structure (in a range ranging from 70% to 90%), having a variable 1,2 unit content as a function of the type of complex and of the polymerization conditions. It has also been seen that the tacticity of the polybutadienes obtained depends strongly on the type of complex, i.e. the type of phosphine bonded to the cobalt atom, and that the syndiotacticity index, expressed as the content (i.e. percentage) of syndiotactic triads [(*rr*) %], determined by the ¹³C-NMR spectra, increases as the steric demand of the alkyl group bonded to the phosphorus atom increases.

The 1,2 polybutadienes obtained with the cobalt systems with less sterically hindered phosphines (e.g., PMePh₂; PEtPh₂; P*ⁿ*PrPh₂ wherein P = phosphorus, Me = methyl, Et = ethyl, Ph = phenyl, *ⁿ*Pr = n-propyl) had a lower crystallinity and a syndiotactic triad content [(*rr*) %] ranging from 20% to 50%, whereas the polybutadienes obtained with catalytic systems that use more sterically hindered phosphines (e.g., P*ⁱ*PrPh₂, PCyPh₂ wherein P = phosphorus, *ⁱ*Pr = iso-propyl, Ph = phenyl, Cy = cyclohexyl) were crystalline, with a melting point (Tₘ) ranging from 100°C to 164°C and a syndiotactic triad content [(*rr*) %] ranging from 60% to 88%, according to the polymerization conditions: in particular, polybutadienes with a melting point (Tₘ) > 150°C and syndiotactic triad content [(*rr*) %] > 85% were obtained only operating at a temperature of -30°C, a temperature that cannot be used in industrial processing plants.

The polymerization of 1,3-butadiene with catalytic systems comprising cobalt complexes with aromatic phosphines having formula CoCl₂(PR₂Ph)₂/MAO (wherein Co = cobalt, Cl = chlorine, R = methyl, ethyl, cyclohexyl, Ph = phenyl, MAO = methylaluminoxane) has also been studied as described, for example, in Italian patents IT 1,349,141, IT 1,349,142. Using said catalytic systems, essentially 1,2 polybutadienes were obtained, but the syndiotactic index of the polymers, under the same polymerization conditions, was slightly lower than that of the 1,2 polybutadienes obtained with catalytic systems comprising cobalt complexes with aromatic phosphines having formula CoCl₂(PRPh₂)₂/MAO described above: in fact, the syndiotactic triad content [(*rr*) %] is ranging from 15% to 45%.

As 1,2 syndiotactic polybutadiene can be advantageously used in different sectors such as, for example, in the footwear industry, in particular for the production of shoe soles, the study of new processes able to provide said polybutadiene is still of great interest. The Applicant therefore set out to solve the problem of finding a new process able to provide 1,2 syndiotactic polybutadiene having a 1,2 unit content greater than or equal to 80%, a syndiotactic triad content [(*rr*) %] greater than or equal to 76%, and a melting point greater than or equal to 139°C. In particular, the Applicant set out to find a new process able to provide 1,2 syndiotactic polybutadiene having the aforementioned characteristics that can be advantageously carried out in industrial processes.

The Applicant has now found a process for the preparation of 1,2 syndiotactic polybutadiene comprising polymerizing 1,3-butadiene in the presence of a catalytic system comprising: at least one cobalt complex with a phosphine ligand selected from high sterically hindered aromatic phosphines having the specific general formula (I) reported below; at least one aluminoxane; said process being carried out at a temperature greater than or equal to 0°C. Operating at a temperature greater than or equal to 0°C, therefore at a temperature that can be used in industrial processing plants, the use of said catalytic system makes it possible to obtain a 1,2 syndiotactic polybutadiene having the following characteristics: a 1,2 unit content greater than or equal to 80%, a syndiotactic triad content [(*rr*) %] greater than or equal to 76%, and a melting point greater than or equal to 139°C. Thanks to these characteristics, the 1,2 syndiotactic polybutadiene obtained can be advantageously used in different sectors such as, for example, in the footwear industry, in particular for the production of shoe soles.

Therefore, the present invention relates to a process for the preparation of 1,2 syndiotactic polybutadiene which comprises polymerizing 1,3-butadiene in the presence of a catalytic system comprising:
- at least one cobalt complex with a phosphine ligand having general formula (I): 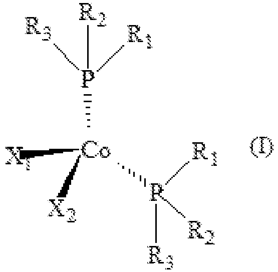 wherein:
   - R₁, R₂ and R₃, mutually identical or different, are selected from branched C₄-C₂₀ alkyl groups, preferably C₄-C₁₅, C₆-C₃₀ cycloalkyl groups, preferably C₆-C₁₅, said cycloalkyl groups being substituted, C₆-C₃₀ aryl groups, preferably C₆-C₁₅, optionally substituted;
      provided that at least two of R₁, R₂ and R₃, are selected from C₆-C₃₀ aryl groups, preferably C₆-C₁₅, optionally substituted
   - X₁ and X₂, mutually identical or different, represent a halogen atom such as, for example, chlorine, bromine, iodine;
   - at least one aluminoxane having general formula (II):

      (R₄)₂-Al-O-[-Al(R₅)-O-]ₘ-Al-(R₆)₂ (II)

      wherein R₄, R₅ and R₆, mutually identical or different, represent a hydrogen atom or a halogen atom such as, for example, chlorine, bromine, iodine, fluorine; or are selected from linear or branched C₁-C₂₀ alkyl groups, cycloalkyl groups, aryl groups, said groups being optionally substituted with one or more silicon or germanium atoms; and m is an integer ranging from 0 to 1000;
   said process being carried out at a temperature ranging from 0°C to +60°C, preferably ranging from 0°C to +30°C.

For the purpose of the present description and of the following claims, the definitions of the numeric ranges always include the extremes unless specified otherwise.

For the purpose of the present description and of the following claims, the term "comprising" also includes the terms "which essentially consists of" or "which consists of".

For the purpose of the present description and of the following claims, the term "C₄-C₂₀ alkyl groups" means branched alkyl groups having from 4 to 20 carbon atoms. Specific examples of branched C₄-C₂₀ alkyl groups are: *tert*-butyl, *tert*-pentyl, iso-pentyl, 3-ethylpent-3-yl, 3-methyl-pent-3-yl.

For the purpose of the present description and of the following claims, the term "C₆-C₃₀ cycloalkyl groups" and "said cycloalkyl groups being substituted" means cycloalkyl groups having from 6 to 30 carbon atoms, substituted with one or more groups, mutually identical or different, selected from: C₁-C₁₂ alkyl groups; C₁-C₁₂ alkoxyl groups. Specific examples of cycloalkyl groups are: hexamethylcyclohexyl, 2-*iso*-propyl-5-methylcyclohexyl (neomenthyl), pentamethylcyclopentyl, 2-cyclooctylethyl, methylcyclohexyl, methoxycyclohexyl, phenylcyclohexyl.

For the purpose of the present description and of the following claims, the term "C₆-C₃₀ aryl groups" means carbocyclic aromatic groups having from 6 to 30 carbon atoms. Said aryl groups can also be optionally substituted with one or more groups, mutually identical or different, selected from: C₁-C₁₂ alkyl groups; C₁-C₁₂ alkoxy groups. Specific examples of aryl groups are: phenyl, 2-methylphenyl, 4-methylphenyl, 2- *tert-*butylphenyl, 2,4,6-trimethylphenyl, 2-*iso*-propylphenyl, methoxyphenyl, 1,1-diphenylethyl, phenyloxyphenyl, naphthyl, phenylnaphthyl, phenanthrene, anthracene. In accordance with a preferred embodiment of the present invention, in said cobalt complex with a phosphine ligand having general formula (I):
- R₁ is selected from branched C₄-C₂₀ alkyl groups, preferably C₄-C₁₅, or from C₆-C₃₀ cycloalkyl groups, preferably C₆-C₁₅, said cycloalkyl groups being substituted; preferably is a *tert*-butyl group or a 2-*iso*-propyl-5-methyl-cyclohexyl (neomenthyl);
- R₂ and R₃, mutually identical, are selected from C₆-C₃₀ aryl groups, preferably C₆-C₁₅, optionally substituted; preferably they represent a phenyl group;
- X₁ and X₂, mutually identical, represent a halogen atom such as, for example, chlorine, bromine, iodine; preferably they represent a chlorine atom;

Further details on said cobalt complex with a phosphine ligand having general formula (I), as well as to its preparation, can be found in the following documents, whose contents are incorporated herein for reference purposes: international patent application WO 2003/018649; italian patents IT 1,349,143, IT 1,349,142; Ricci G. et al., "Journal of Molecular Catalysis A: Chemical" (2005), Vol. 226, pp. 235-241; Ricci G. et al., "Macromolecules" (2005), Vol. 38, pp. 1064-1070; Ricci G. et al., "Journal of Organometallic Chemistry" (2005), Vol. 690, pp. 1845-1854; Ricci G. et al., "Advanced in Organometallic Chemistry Research" (2007), K. Yamamoto Ed., Nova Science Publisher, Inc. USA, pp. 1-36; Ricci G. et al., "Coordination Chemistry Reviews" (2010), Vol. 254, pp. 661-676; Ricci G. et al., "Cobalt: Characteristics, Compounds, and Applications" (2011), Lucas J. Vidmar Ed., Nova Science Publisher, Inc., USA, pp. 39-81; Ricci G. et al., "Phosphorus: Properties, Health effects and the Environment" (2012), Ming Yue Chen and Da-Xia Yang Eds., Nova Science Publisher, Inc., USA, pp. 53-94.

The cobalt complex with a phosphine ligand having general formula (I) can be considered, in accordance with the present invention, under any physical form such as, for example, the isolated and purified solid form, the form solvated with a suitable solvent, or the one supported on suitable organic or inorganic solids, preferably having a granular or powdered physical form.

The cobalt complex with a phosphine ligand having general formula (I) can be prepared according to processes known in the prior art. For example, said cobalt complex with a phosphine ligand having general formula (I) can be prepared by reaction between cobalt compounds having general formula Co(X)₂ wherein X is a halogen atom such as, for example, chlorine, bromine, iodine, preferably chlorine, as such or complexed with ethers [for example, diethylether, tetrahydrofuran (THF), dimethoxyethane], with phosphines such as, for example, *tert-*butyldiphenylphosphine (P^{t}BuPh₂), (S)-(+)neomenthyl diphenylphosphine [(S)-NMDPP], said phosphines being used in stoichiometric quantities, preferably operating in the presence of at least one solvent that can be selected, for example, from: alcohols (for example, ethanol), hydrocarbon solvents (for example, toluene), chlorinated solvents (for example, methylene chloride), ether solvents [for example, tetrahydrofuran (THF)], or mixtures thereof, at a temperature ranging from ambient temperature to 110°C, preferably at ambient temperature. The cobalt complex with a phosphine ligand thus obtained can be subsequently recovered through methods known in the prior art such as, for example, precipitation through a nonsolvent (for example, pentane), followed by separation through filtration or decantation and any subsequent solubilization in a suitable solvent followed by crystallization at a low temperature.

It is also to be noted that, in accordance with the present invention, said cobalt complex with a phosphine ligand having general formula (I), can be prepared *in situ,* i.e. directly in the polymerization environment. On this point, said cobalt complex with a phosphine ligand having general formula (I), can be prepared by separately introducing the ligand (obtained, for example, in accordance with the description in the documents mentioned above, or commercially available), the cobalt-containing compound [for example, cobalt dichloride (CoCl₂)] and the 1,3-butadiene to be polymerized, preselected, operating at the conditions wherein the polymerization is carried out.

For the purpose of the present description and of the following claims the expression "ambient temperature" means a temperature ranging from 20°C to 25°C.

As is known, aluminoxanes are compounds containing Al-O-Al bonds, with a variable O/Al ratio, obtainable according to processes known in the prior art such as, for example, by reaction, in controlled conditions, of an aluminum alkyl or an aluminum alkyl halogenide, with water, or with other compounds containing predetermined quantities of available water such as, for example, in the case of the reaction of aluminum trimethyl with aluminum sulfate hexahydrate, copper sulfate pentahydrate, or iron sulfate pentahydrate.

Said aluminoxanes and, in particular, methylaluminoxane (MAO), are compounds that can be obtained through known organometallic chemical processes such as, for example, by adding trimethyl aluminum to an hexane suspension of aluminum sulfate hexahydrate.

In accordance with a preferred embodiment of the present invention, said aluminoxane having general formula (II) can be selected, for example, from: methylaluminoxane (MAO), ethylaluminoxane, *n*-butylaluminoxane, tetra-*iso*-butylaluminoxane (TIBAO), *tert-*butylaluminoxane, tetra-(2,4,4-trimethylpentyl)aluminoxane (TIOAO), tetra-(2,3-dimethylbutyl)aluminoxane (TDMBAO), tetra-(2,3,3-trimethylbutyl)aluminoxane (TTMBAO), or mixtures thereof. Methylaluminoxane (MAO) is particularly preferred. Further details on the aluminoxane having general formula (II) can be found, for example, in international patent application WO 2011/061151.

In general, the formation of the aforementioned catalytic system is preferably carried out in an inert liquid means, more preferably in a hydrocarbon solvent. The choice of the cobalt complex with a phosphine ligand having general formula (I) and of the aluminoxane having general formula (II), as well as the particular methodology used, may vary according to the molecular structures and the desired result, according to what is similarly reported in the relevant literature accessible to an expert skilled in the art for other transition metal complexes with ligands of various kinds, such as, for example, in: Ricci G. et al., "Advances in Organometallic Chemistry Research" (2007), Yamamoto K. Ed., Nova Science Publisher, Inc., USA, pp. 1-36; Ricci G. et al., "Coordination Chemistry Reviews" (2010), Vol. 254, pp. 661-676; Ricci G. et al., "Cobalt: Characteristics, Compounds, and Applications" (2011), Lucas J. Vidmar Ed., Nova Science Publisher, Inc., USA, pp. 39-81; Ricci G. et al., "Phosphorus: Properties, Health effects and Environment" (2012), Ming Yue Chen and Da-Xia Yang Eds., Nova Science Publisher, Inc., USA, pp. 53-94.

For the purpose of the present invention, the aluminoxane having general formula (II) can be placed in contact with a cobalt complex with a phosphine ligand having general formula (I), in proportions such that the molar ratio between the aluminum present in the aluminoxane having general formula (II) and the cobalt present in the cobalt complex with a phosphine ligand having general formula (I) is ranging from 10 to 1000, preferably ranging from 10 to 100. The sequence with which the cobalt complex with a phosphine ligand having general formula (I) and the aluminoxane having general formula (II) are placed in contact with each other is not particularly critical.

For the purpose of the present description and of the following claims, the terms "mole" and "molar ratio" are used both with reference to compounds consisting of molecules and with reference to atoms and ions, omitting for the latter ones the terms gram atom or atomic ratio, even if they are scientifically more accurate.

For the purpose of the present invention, other additives or components may optionally be added to the aforementioned catalytic system so as to adapt it to satisfy specific practical requirements. The catalytic systems thus obtained can therefore be considered included within the scope of the present invention. Additives and/or components that can be added in the preparation and/or formulation of the aforementioned catalytic system are, for example: inert solvents, such as, for example, aliphatic and/or aromatic hydrocarbons; aliphatic and/or aromatic ethers; weakly coordinating additives (e.g., Lewis bases) selected, for example, from non-polymerizable olefins; sterically hindered or electronically poor ethers; halogenating agents such as, for example, silicon halides, halogenated hydrocarbons, preferably chlorinated; or mixtures thereof.

Said catalytic system can be prepared, as already reported above, according to methods known in the prior art.

For example, said catalytic system can be prepared separately (preformed) and subsequently introduced into the polymerization environment. On this point, said catalytic system can be prepared by reacting at least one cobalt complex with a phosphine ligand having general formula (I) with at least one aluminoxane having general formula (II), optionally in the presence of other additives or components selected from those cited above, in the presence of a solvent such as, for example, toluene, heptane, at a temperature ranging from 20°C to 60°C, for a time ranging from 10 seconds to 10 hours, preferably ranging from 30 seconds to 5 hours.

Alternatively, said catalytic system can be prepared *in situ,* i.e. directly in the polymerization environment. On that point, said catalytic system can be prepared by separately introducing the cobalt complex with a phosphine ligand having general formula (I), the aluminoxane having general formula (II) and the 1,3-butadiene, operating under the conditions wherein the polymerization is carried out.

Further details on the preparation of said catalytic system can be found in the examples reported below.

For the purpose of the present invention, the aforementioned catalytic system can also be supported on inert solids, preferably consisting of silicon and/or aluminum oxides, such as, for example, silica, alumina or silico-aluminates. For supporting said catalytic system the known supporting techniques can be used, generally comprising contact, in a suitable inert liquid medium, between the support, optionally activated by heating to temperatures over 200°C, and one or both components of said catalytic system. It is not necessary, for the purposes of the present invention, for both components to be supported, since only the cobalt complex with a phosphine ligand having general formula (I), or the aluminoxane having general formula (II) can be present on the support surface. In the latter case, the missing component on the surface is subsequently placed in contact with the supported component when the active catalytic system is to be formed for the polymerization.

The scope of the present invention also includes the cobalt complex with a phosphine ligand having general formula (I), and the catalytic systems based thereon, which are supported on a solid through the functionalization of the latter and the formation of a covalent bond between the solid and the cobalt complex with a phosphine ligand having general formula (I).

The quantity of the cobalt complex with a phosphine ligand having general formula (I) and the aluminoxane having general formula (II) which can be used in the process according to the present invention varies according to the polymerization process to be carried out. As mentioned above, said quantity is however such as to obtain a molar ratio between the aluminum present in the aluminoxane having general formula (II) and the cobalt present in the cobalt complex with a phosphine ligand having general formula (I) ranging from the values stated above.

In accordance with a preferred embodiment of the present invention, said process can be carried out in the presence of at least one inert organic solvent selected, for example, from: saturated aliphatic hydrocarbons such as, for example, butane, pentane, hexane, heptane, or mixtures thereof; saturated cyclo-aliphatic hydrocarbons such as, for example, cyclopentane, cyclohexane, or mixtures thereof; mono-olefins such as, for example, 1-butene, 2-butene, or mixtures thereof; aromatic hydrocarbons such as, for example, benzene, toluene, xylene, or mixtures thereof; halogenated hydrocarbons such as, for example, methylene chloride, chloroform, carbon tetrachloride, trichloroethylene, perchloroethylene, 1,2-dichloroethane, chlorobenzene, bromobenzene, chlorotoluene, or mixtures thereof. Hexane, heptane, toluene are preferred.

In accordance with a preferred embodiment of the present invention, in said process, the concentration of 1,3-butadiene in said inert organic solvent can be ranging from 5% by weight to 50% by weight, preferably ranging from 10% by weight to 20% by weight, with respect with the total weight of the mixture of 1,3-butadiene and inert organic solvent. With regard to pressure, it is preferable to operate at the pressure of the components of the mixture to be polymerized.

Said process can be carried out both continuously and in batches, preferably continuously.

The process according to the present invention allows 1,2 syndiotactic polybutadiene with the following characteristics to be obtained:
- 1,2 unit content greater than or equal to 80%, preferably ranging from 85% to 95%;
- syndiotactic triad content [(*rr*) %], greater than or equal to 76%, preferably ranging from 79% to 86%;
- melting point greater than or equal to 139°C, preferably ranging from 140°C to 165°C;
- weight average molecular weight (M_{w}) ranging from 100000 gxmol⁻¹ to 300000 gxmol⁻¹, preferably ranging from 120000 gxmol⁻¹ to 250000 gxmol⁻¹.

As mentioned above, the 1,2 syndiotactic polybutadiene obtained according to the process of the present invention can be advantageously used in different sectors, such as in the footwear industry, in particularly for the production of shoe soles.

As mentioned above, further subject matter of the present invention is a cobalt complex with a phosphine ligand selected from high sterically hindered aromatic phosphines having general formula (I): 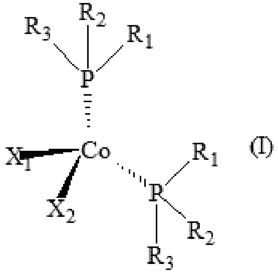 wherein:
- R₁ is selected from branched C₄-C₂₀ alkyl groups, preferably C₄-C₁₅, or from C₆-C₃₀ cycloalkyl groups, preferably C₆-C₁₅, said cycloalkyl groups being substituted; preferably is a *tert*-butyl group or a 2-*iso*-propyl-5-methyl-cyclohexly (neomenthyl);
- R₂ and R₃, mutually identical, are selected from C₆-C₃₀ aryl groups, preferably C₆-C₁₅, optionally substituted; preferably they represent a phenyl group;
- X₁ and X₂, mutually identical, represent a halogen atom such as, for example, chlorine, bromine, iodine; preferably they represent a chlorine atom.

For the purpose of understanding the present invention better and to put it into practice, below are some illustrative and non-limiting examples thereof.

### EXAMPLES

### Reagents and materials

The list below reports the reagents and materials used in the following examples of the invention, any pre-treatments thereof and their manufacturer:
- cobalt dichloride anhydrous (CoCl₂) (Strem Chemicals): used as such;
- ethanol (Sigma-Aldrich): pure, ≥ 99,8%, used as such;
- *tert*-butyl(diphenyl)phosphine (P*^{t}*BuPh₂) (Sigma-Aldrich): purity 97%, used as such;
- (S)-(+)neomenthyl diphenylphosphine [(S)-NMDPP] (Strem Chemicals): purity 98%, used as such;
- pentane (Aldrich): pure, ≥ 99.5%, distilled over sodium (Na) in an inert atmosphere;
- methylaluminoxane (MAO) (toluene solution 10% in weight) (Aldrich): used as such;
- 1,3-butadiene (Air Liquide): pure, ≥ 99.5%, evaporated from the container before each production, dried by passing it through a molecular sieve packed column and condensed inside the reactor that was pre-cooled to -20°C;
- hydrochloric acid in 37% aqueous solution (Aldrich): used as such;
- methanol (Carlo Erba, RPE): used as such;
- toluene (Aldrich): pure, ≥ 99.5%, distilled over sodium (Na) in an inert atmosphere;
- hydrofluoric acid (HF) (40% aqueous solution) (Aldrich): used as such;
- sulfuric acid (H₂SO₄) (96% aqueous solution) (Aldrich): used as such, or diluted with distilled water (1/5);
- nitric acid (HNO₃) (70% aqueous solution) (Aldrich): used as such;
- sodium carbonate (Na₂CO₃) (Aldrich): used as such;
- silver nitrate (AgNO₃) (Aldrich): used as such;
- deuterated tetrachloroethylene (C₂D₂Cl₄) (Acros): used as such;
- hexamethyldisilazane (HMDS) (Acros): used as such;
- deuterated chloroform (CDCl₃) (Acros): used as it is;
- tetramethyldisilane (TMS) (Acros): used as such.

The analysis and classification methodologies reported below were used.

### Elementary analysis

### a) Determination of Co

For the determination of the quantity by weight of cobalt (Co), in the cobalt complexes with a phosphine ligand used for the purpose of the present invention, an exactly weighed aliquot, operating in dry-box under nitrogen flow, of about 30 mg - 50 mg of sample, was placed in a 30 ml platinum crucible, together with a 1 ml mixture of 40% hydrofluoric acid (HF), 0.25 ml of 96% sulfuric acid (H₂SO₄) and 1 ml of 70% nitric acid (HNO₃). The crucible was then heated on a hot plate increasing the temperature until white sulfur fumes appeared (about 200°C). The mixture thus obtained was cooled to ambient temperature and 1 ml of 70% nitric acid (HNO₃) was added, then it was left again until fumes appeared. After repeating the sequence another two times, a clear, almost colorless, solution was obtained. 1 ml of nitric acid (HNO₃) and about 15 ml of water were then added cold, then heated to 80°C for about 30 minutes. The sample thus prepared was diluted with MilliQ pure water until it weighed about 50 g, precisely weighed, to obtain a solution on which the instrumental analytical determination was carried out using a Thermo Optek IRIS Advantage Duo ICP-OES (plasma optical emission) spectrometer, for comparison with solutions of known concentration. For this purpose, for every analyte, a calibration curve was prepared in the range 0 ppm - 10 ppm, measuring calibration solutions by dilution by weight of certified solutions.

The solution of sample prepared as above was then diluted again by weight in order to obtain concentrations close to the reference ones, before carrying out spectrophotometric measurement. All the samples were prepared in double quantities.

The results were considered acceptable if the individual repeated test data did not have a relative deviation of more than 2% relative to their mean value.

### b) Determination of chlorine

For said purpose, samples of the cobalt complexes with a phosphine ligand used for the purpose of the present invention, about 30 mg - 50 mg, were precisely weighed in 100 ml glass beakers in dry-box under nitrogen flow. 2 g of sodium carbonate (Na₂CO₃) were added and, outside the dry-box, 50 ml of MilliQ water. It was brought to the boil on the hot plate, under magnetic stirring, for about 30 minutes. It was left to cool, then 1/5 diluted sulfuric acid (H₂SO₄) was added, until acid reaction and was then titrated with 0.1 N silver nitrate (AgNO₃) with a potentiometric titrator.

### c) Determination of carbon, hydrogen, nitrogen and phosphorus

The determination of carbon, hydrogen and nitrogen, in the cobalt complexes with a phosphine ligand used for the purpose of the present invention, was carried out through a Carlo Erba automatic analyzer Mod. 1106.

### X-ray diffraction (XRD)

For this purpose, samples of the cobalt complexes with a phosphine ligand used for the purpose of the present invention, of about 1 g, were loaded onto the porous baffle of a hot extractor for solids and continuously extracted with boiling pentane for about 2 days obtaining crystalline products (individual crystals) that were analyzed through X-ray diffraction (XRD) using a Bruker AXS Smart Apex II diffractometer equipped with CCD detector and an Oxford Cryostram unit for nitrogen flow assembled at the base of the goniometer to allow data to be collected at different temperatures, i.e. in a temperature range ranging from 100 K (-173.15°C) to 300 K (26.85°C): the operating conditions are reported in Table 1 and in Table 2.

Table 1 and Table 2 also report the crystallographic data of the samples analyzed.

### ¹³C-HMR and ¹H-HMR spectra

The ¹³C-HMR and ¹H-HMR spectra were recorded using a nuclear magnetic resonance spectrometer mod. Bruker Avance 400, using deuterated tetrachloroethylene (C₂D₂Cl₄) at 103°C, and hexamethyldisiloxane (HDMS) as internal standard, or using deuterated chloroform (CDCl₃), at 25°C, and tetramethylsilane (TMS) as internal standard. For this purpose, polymeric solutions were used with concentrations equal to 10% by weight with respect to the total weight of the polymeric solution.

The microstructure of the polymers [i.e. 1,4-*cis* (%) and 1,2 (%) unit content and syndiotactic triad content [(*rr*) %], was determined through the analysis of the aforementioned spectra based on the contents of literature by Mochel V. D., in "Journal of Polymer Science Part A-1: Polymer Chemistry" (1972), Vol. 10, Issue 4, pp. 1009-1018.

### I.R. Spectra

The I.R. spectra were recorded through Thermo Nicolet Nexus 670 and Bruker IFS 48 spectrophotometers.

The I.R. spectra of the polymers were obtained from polymeric films on potassium bromide (KBr) tablets, said films being obtained through the deposition of a solution in hot 1,2-dichlorobenzene of the polymer to be analyzed. The concentration of the polymeric solutions analyzed was equal to 10% by weight with respect to the total weight of the polymeric solution.

### Thermal analysis (DSC)

The DSC - Differential Scanning Calorimetry - thermal analysis, for the purpose of determining the melting point (Tₘ) of the polymers obtained, was carried out using a Perkin Elmer Pyris differential scanning calorimeter. For this purpose, 5 mg of polymer were analyzed, with a scanning speed ranging from 1°C/min to 20°C/min, in an inert nitrogen atmosphere.

### Determination of the molecular weight

The determination of the molecular weight (M_{W}) of the polymers obtained was carried out through GPC ("Gel Permeation Chromatography"), using the Waters® Alliance® GPC/V 2000 System by Waters Corporation which uses two detection lines: "Refractive Index" - RI and "Viscometer" operating under the following conditions:
- two PLgel Mixed-B columns;
- solvent/eluent: o-dichlorobenzene (Aldrich);
- flow rate: 0.8 ml/min;
- temperature: 145°C;
- molecular mass calculation: Universal Calibration method.

The weight-average molecular weight (M_{w}) and the Polydispersion Index (PDI) are reported, corresponding to the ratio M_{w}/Mₙ (Mₙ = number-average molecular weight).

### EXAMPLE 1

### Synthesis of CoCl₂(P^{t}BuPh₂) [sample G13781

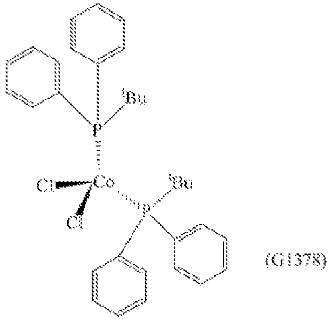

Cobalt dichloride (CoCl₂) anhydrous (1.24 g, 9.6 mmoles) and 40 ml of ethanol were placed in a 250 ml flask: the blue solution obtained was kept under stirring (500 rpm), at 22°C, for about 2 hours. Subsequently, *tert*-butyldiphenylphosphine (P*^{t}*BuPh₂) (5.1 g, 21 mmoles) dissolved in ethanol (30 ml) was added: everything was kept under stirring (500 rpm), at ambient temperature, for 24 hours and subsequently placed, under vacuum, at ambient temperature, for the purpose of almost completely removing the ethanol. Then pentane (40 ml) was added and everything was kept under stirring (500 rpm), at ambient temperature, for 2 hours: at the end, the light blue/blue suspension obtained was filtered and the residue obtained was washed further with pentane (2 x 10 ml) and vacuum dried, at ambient temperature, obtaining 4.71 g of a solid product corresponding to the complex CoCl₂(P*^{t}*BuPh₂) equal to an 80% conversion with respect to the cobalt dichloride (CoCl₂) anhydrous loaded.

Individual crystals of the aforementioned solid product corresponding to the complex CoCl₂(P*^{t}*BuPh₂) were obtained by continuous extraction, hot, with pentane: Table 1 and Table 2 show the crystallographic data obtained.
Elementary analysis [found (calculated) for C₃₂H₃₈Cl₂CoP₂]: C: 62.50% (62.55%); H: 6.20% (6.23%); Cl: 11.50% (11.54%); P: 10.00% (10.08%); Co: 9.50% (9.59%).
Molecular weight: 614.43.

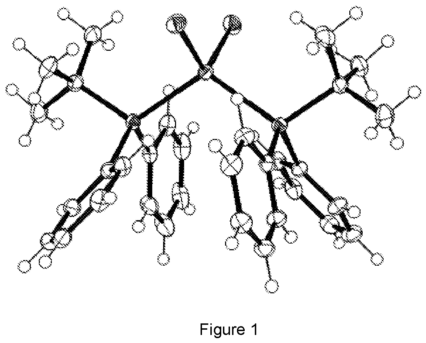

Figure 1 shows the XRD structure of the complex CoCl₂(P*^{t}*BuPh₂) obtained.

Figure 2 shows the FT-IR spectrum of the complex CoCl₂(P*^{t}*BuPh₂) obtained.

### EXAMPLE 2

### Synthesis of CoCl₂[PPh₂(NMDPP)][sample G15191

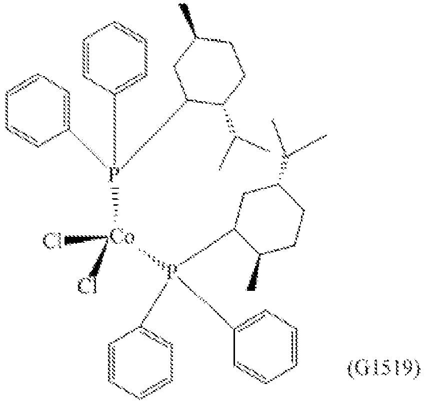

Cobalt dichloride (CoCl₂) anhydrous (0.182 g, 1.4 mmoles) and 20 ml of ethanol were placed in a 100 ml flask: the blue solution obtained was kept under stirring (500 rpm), at ambient temperature, for 1 hour. Subsequently, (S)-(+)neomenthyl-diphenylphosphine [(S)-NMDPP] (1 g, 3.08 mmoles) dissolved in ethanol (30 ml) were added: everything was brought to 60°C and kept, under stirring (500 rpm), at said temperature, for 24 hours. Subsequently, the mixture obtained was vacuum dried, at ambient temperature and then pentane (30 ml) was added and everything was kept under stirring (500 rpm), at ambient temperature, for 2 hours. At the end, the light blue/blue suspension obtained was filtered and the residue obtained was washed further with pentane (2 x 10 ml) and vacuum dried, at ambient temperature, obtaining 0.950 g of a solid product corresponding to the complex CoCl₂[PPh₂(NMDPP)] equal to an 87% conversion with respect to the cobalt dichloride (CoCl₂) anhydrous loaded.
Elementary analysis [found (calculated) for C₄₄H₅₈Cl₂CoP₂]: C: 67.60% (67.86%); H: 7.40% (7.51%); Cl: 8.90% (9.11%); P: 7.90% (7.96%); Co: 7.50% (7.57%).
Molecular weight: 778.72.

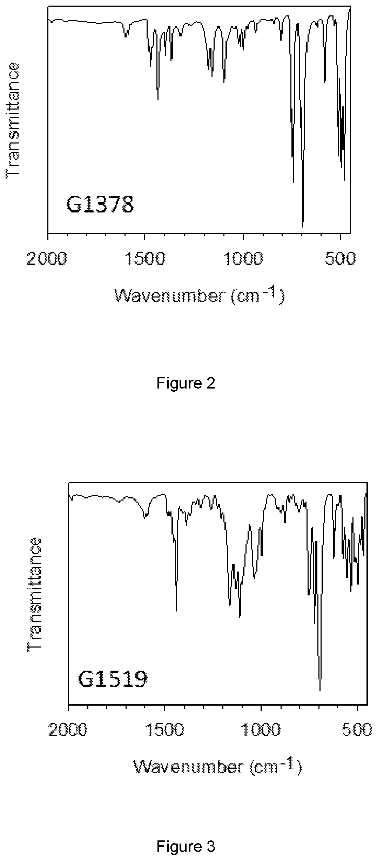

Figure 3 shows the FT-IR spectrum of the complex CoCl₂[PPh₂(NMDPP)] obtained.

### EXAMPLE 3

2 ml of 1,3-butadiene equal to about 1.4 g were condensed, cold (-20°C), in a 25 ml test tube. Subsequently, 12.3 ml of toluene were added and the temperature of the solution thus obtained was brought to +20°C. Then, methylaluminoxane (MAO) in toluene solution (0.63 ml; 1×10⁻³ moles, equal to about 0.058 g) was added, and, subsequently, CoCl₂(P*^{t}*BuPh₂) complex [sample G1378] (3.07 ml of toluene solution at concentration of 2 mg/ml; 1×10⁻⁵ moles, equal to about 6.14 mg) obtained as described in Example 1.

Everything was kept under magnetic stirring, at +20°C, for 10 minutes. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 1.4 g of 1,2 syndiotactic polybutadiene: further characteristics of the process and of the 1,2 syndiotactic polybutadiene obtained are reported in Table 3.

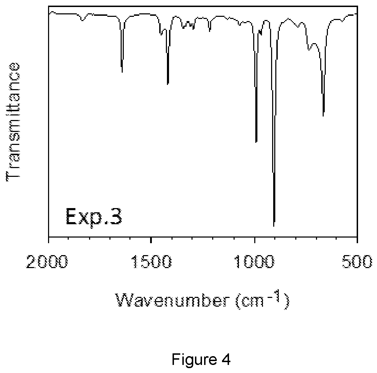

Figure 4 shows the FT-IR spectrum of the 1,2 syndiotactic polybutadiene obtained.

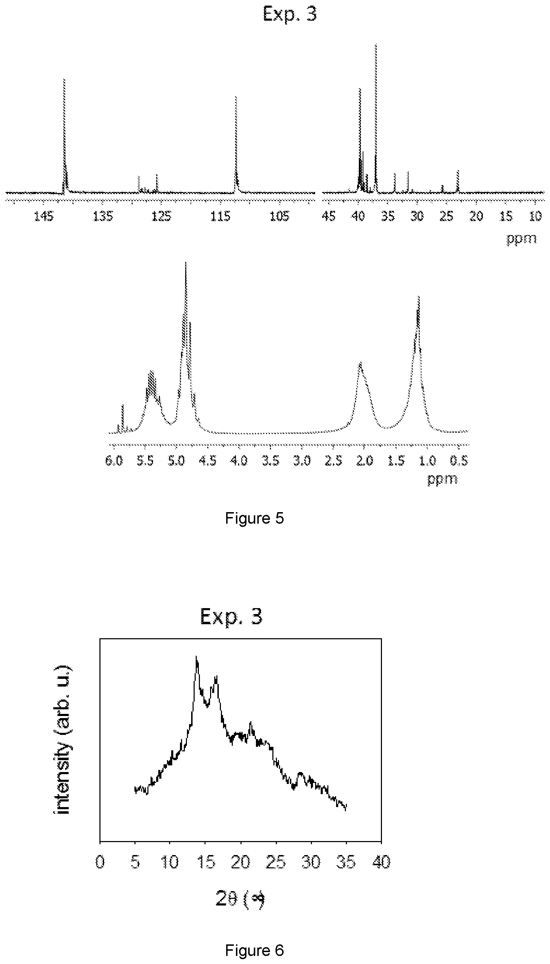

Figure 5 shows the ¹H-NMR (top) and ¹³C-NMR (bottom) spectra of the 1,2 syndiotactic polybutadiene obtained.

Figure 6 shows the RX spectrum of the 1,2 syndiotactic polybutadiene obtained.

### EXAMPLE 4

2 ml of 1,3-butadiene equal to about 1.4 g were condensed, cold (-20°C), in a 25 ml test tube. Subsequently, 6.61 ml of toluene were added and the temperature of the solution thus obtained was brought to +20°C. Then, methylaluminoxane (MAO) in toluene solution (0.19 ml; 3×10⁻⁴ moles, equal to about 0.017 g) was added, and, subsequently, CoCl₂(P*^{t}*BuPh₂) complex [sample G1378] (9.2 ml of toluene solution at concentration of 2 mg/ml; 3x10⁻⁵ moles, equal to about 18.4 mg) obtained as described in Example 1.

Everything was kept under magnetic stirring, at +20°C, for 30 minutes. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 1.4 g of 1,2 syndiotactic polybutadiene: further characteristics of the process and of the 1,2 syndiotactic polybutadiene obtained are reported in Table 3.

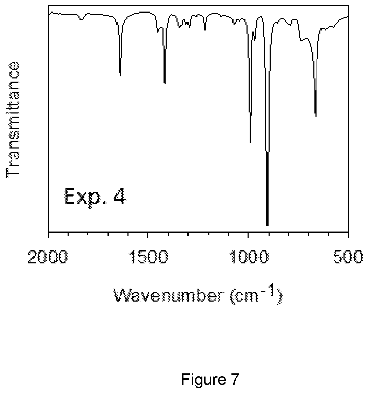

Figure 7 shows the FT-IR spectrum of the 1,2 syndiotactic polybutadiene obtained.

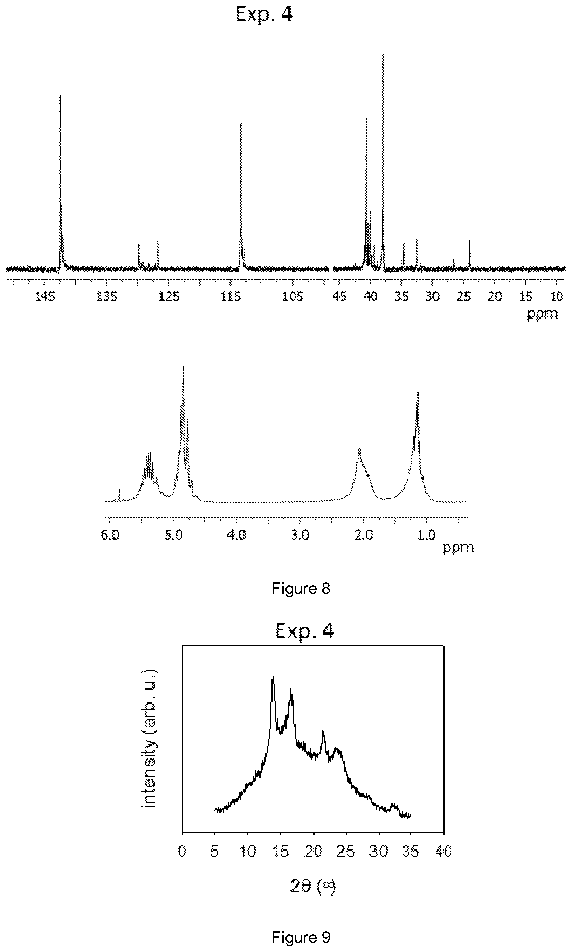

Figure 8 shows the ¹H-NMR (top) and ¹³C-NMR (bottom) spectra of the 1,2 syndiotactic polybutadiene obtained.

Figure 9 shows the RX spectrum of the 1,2 syndiotactic polybutadiene obtained.

### EXAMPLE 5

2 ml of 1,3-butadiene equal to about 1.4 g were condensed, cold (-20°C), in a 25 ml test tube. Subsequently, 9.7 ml of heptane were added and the temperature of the solution thus obtained was brought to +20°C. Then, methylaluminoxane (MAO) in toluene solution (0.19 ml; 3×10⁻⁴ moles, equal to about 0.017 g) was added, and, subsequently, CoCl₂(P*^{t}*BuPh₂) complex [sample G1378] (9.2 ml of heptane solution at concentration of 2 mg/ml; 3x10⁻⁵ moles, equal to about 18.4 mg) obtained as described in Example 1.

Everything was kept under magnetic stirring, at +20°C, for 60 minutes. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 1.4 g of 1,2 syndiotactic polybutadiene: further characteristics of the process and of the 1,2 syndiotactic polybutadiene obtained are reported in Table 3.

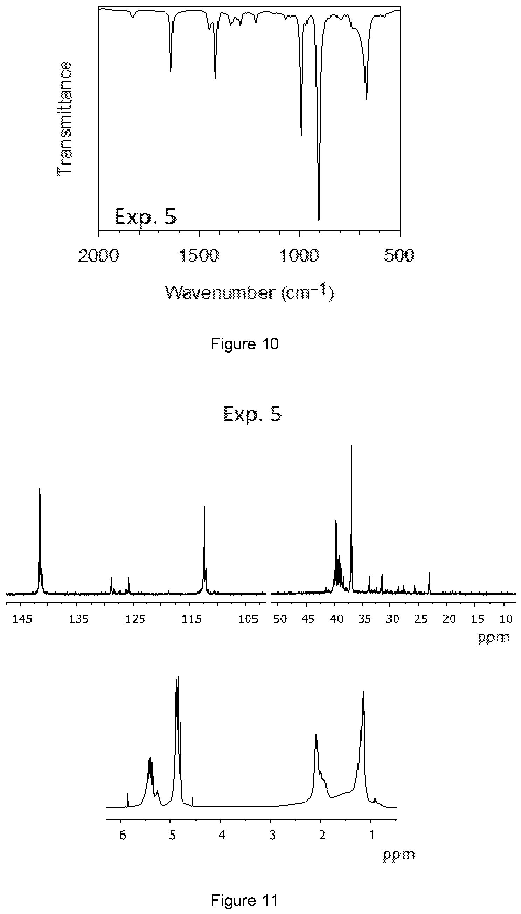

Figure 10 shows the FT-IR spectrum of the 1,2 syndiotactic polybutadiene obtained.

Figure 11 shows the ¹H-NMR (top) and ¹³C-NMR (bottom) spectra of the 1,2 syndiotactic polybutadiene obtained.

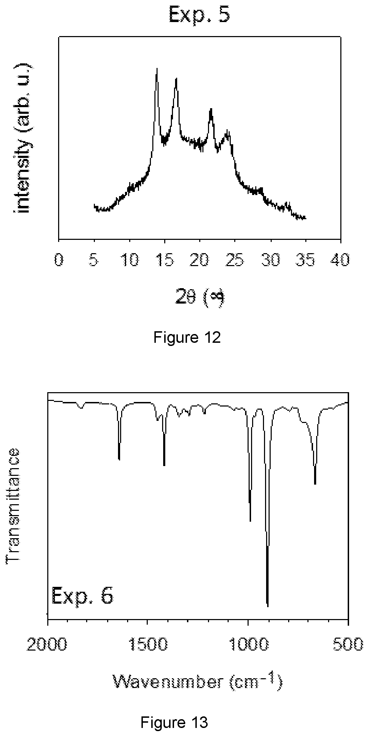

Figure 12 shows the RX spectrum of the 1,2 syndiotactic polybutadiene obtained.

### EXAMPLE 6

2 ml of 1,3-butadiene equal to about 1.4 g were condensed, cold (-20°C), in a 25 ml test tube. Subsequently, 6.6 ml of toluene were added and the temperature of the solution thus obtained was brought to +20°C. Then, methylaluminoxane (MAO) in toluene solution (0.48 ml; 7.5x10⁻⁴ moles, equal to about 0.043 g) was added, and, subsequently, CoCl₂(P*^{t}*BuPh₂) complex [sample G1378] (9.2 ml of heptane solution at concentration of 2 mg/ml; 3×10⁻⁵ moles, equal to about 18.4 mg) obtained as described in Example 1. Everything was kept under magnetic stirring, at 0°C, for 60 minutes. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 1.4 g of 1,2 syndiotactic polybutadiene: further characteristics of the process and of the 1,2 syndiotactic polybutadiene obtained are reported in Table 3.

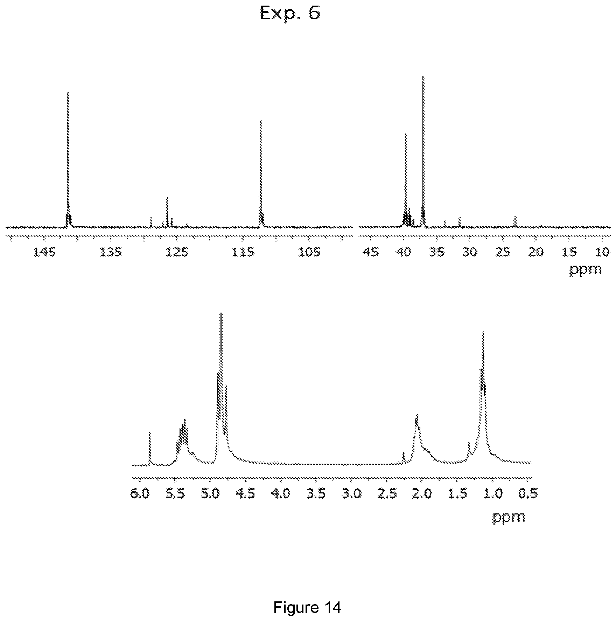

Figure 13 shows the FT-IR spectrum of the 1,2 syndiotactic polybutadiene obtained. Figure 14 shows the ¹H-NMR (top) and ¹³C-NMR (bottom) spectra of the 1,2 syndiotactic polybutadiene obtained.

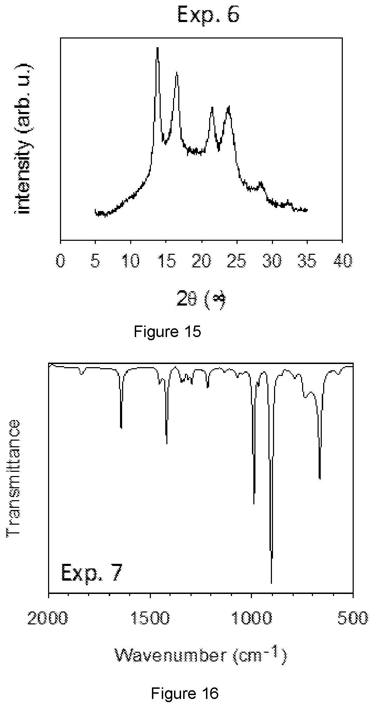

Figure 15 shows the RX spectrum of the 1,2 syndiotactic polybutadiene obtained.

### EXAMPLE 7

2 ml of 1,3-butadiene equal to about 1.4 g were condensed, cold (-20°C), in a 25 ml test tube. Subsequently, 11.5 ml of toluene were added and the temperature of the solution thus obtained was brought to +20°C. Then, methylaluminoxane (MAO) in toluene solution (0.63 ml; 1×10⁻³ moles, equal to about 0.058 g) was added, and, subsequently, the CoCl₂[PPh₂(NMDPP)] complex [sample G1519] (3.9 ml of toluene solution at concentration of 2 mg/ml; 1×10⁻⁵ moles, equal to about 7.79 mg) obtained as described in Example 2. Everything was kept under magnetic stirring, at +20°C, for 15 minutes.

The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 1.4 g of 1,2 syndiotactic polybutadiene: further characteristics of the process and of the 1,2 syndiotactic polybutadiene obtained are reported in Table 3.

Figure 16 shows the FT-IR spectrum of the 1,2 syndiotactic polybutadiene obtained.

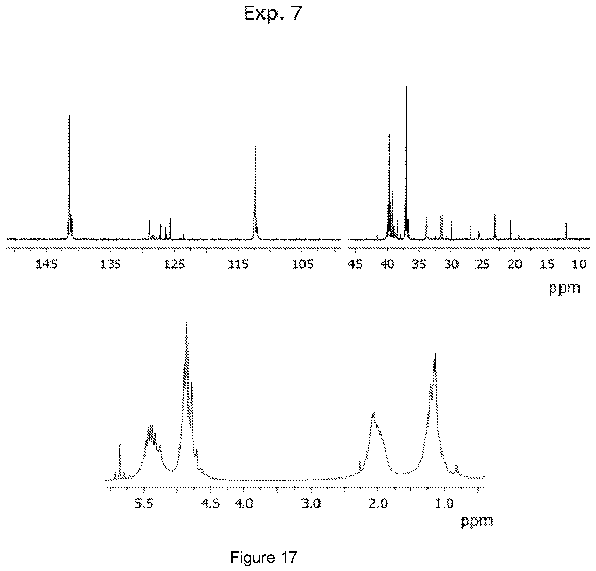

Figure 17 shows the ¹H-NMR (top) and ¹³C-NMR (bottom) spectra of the 1,2 syndiotactic polybutadiene obtained.

### EXAMPLE 8

2 ml of 1,3-butadiene equal to about 1.4 g were condensed, cold (-20°C), in a 25 ml test tube. Subsequently, 7.9 ml of heptane were added and the temperature of the solution thus obtained was brought to +20°C. Then, methylaluminoxane (MAO) in toluene solution (0.315 ml; 5×10⁻⁴ moles, equal to about 0.029 g) was added, and, subsequently, the CoCl₂[PPh₂(NMDPP)] complex [sample G1519] (7.79 ml of heptane solution at concentration of 2 mg/ml; 2×10⁻⁵ moles, equal to about 15.58 mg) obtained as described in Example 2. Everything was kept under magnetic stirring, at +20°C, for 60 minutes. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 1.4 g of 1,2 syndiotactic polybutadiene: further characteristics of the process and of the 1,2 syndiotactic polybutadiene obtained are reported in Table 3.

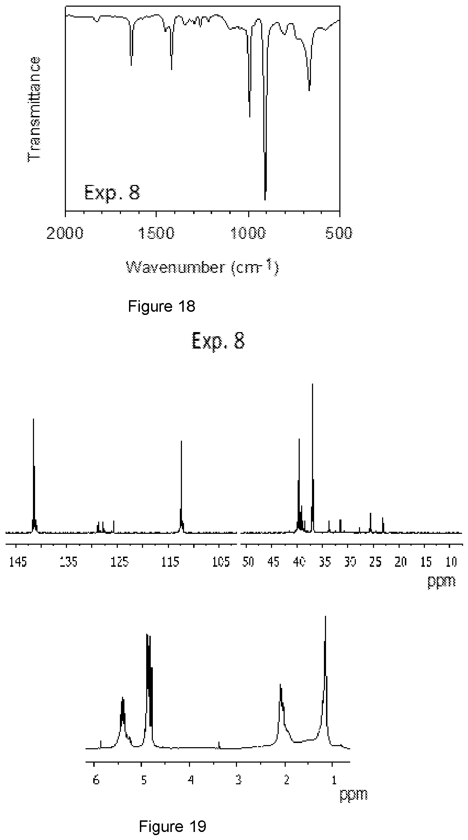

Figure 18 shows the FT-IR spectrum of the 1,2 syndiotactic polybutadiene obtained.

Figure 19 shows the ¹H-NMR (top) and ¹³C-NMR (bottom) spectra of the 1,2 syndiotactic polybutadiene obtained.

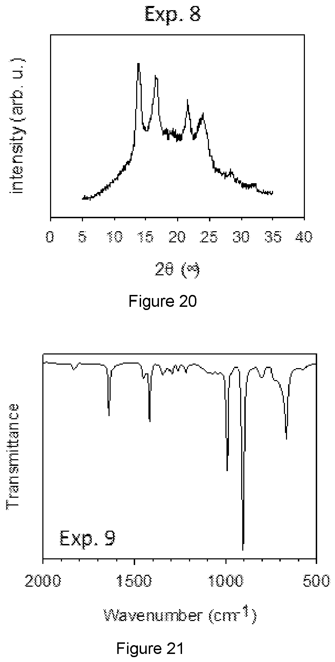

Figure 20 shows the RX spectrum of the 1,2 syndiotactic polybutadiene obtained.

### EXAMPLE 9

2 ml of 1,3-butadiene equal to about 1.4 g were condensed, cold (-20°C), in a 25 ml test tube. Subsequently, 3.85 ml of heptane were added and the temperature of the solution thus obtained was brought to 0°C. Then, methylaluminoxane (MAO) in toluene solution (0.47 ml; 7.5×10⁻⁴ moles, equal to about 0.044 g) was added, and, subsequently, the CoCl₂[PPh₂(NMDPP)] complex [sample G1519] (11.68 ml of heptane solution at concentration of 2 mg/ml; 3x10⁻⁵ moles, equal to about 23.36 mg) obtained as described in Example 2. Everything was kept under magnetic stirring, at 0°C, for 10 minutes. The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 1.01 g of 1,2 syndiotactic polybutadiene: further characteristics of the process and of the 1,2 syndiotactic polybutadiene obtained are reported in Table 3.

Figure 21 shows the FT-IR spectrum of the 1,2 syndiotactic polybutadiene obtained.

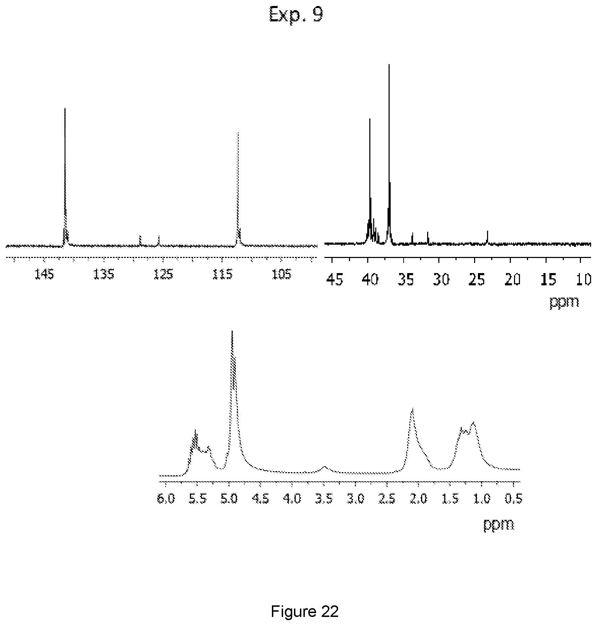

Figure 22 shows the ¹H-NMR (top) and ¹³C-NMR (bottom) spectra of the 1,2 syndiotactic polybutadiene obtained.

### EXAMPLE 10 (comparative)

### Synthesis of CoCl₂(PPh₂Cy) [sample A711

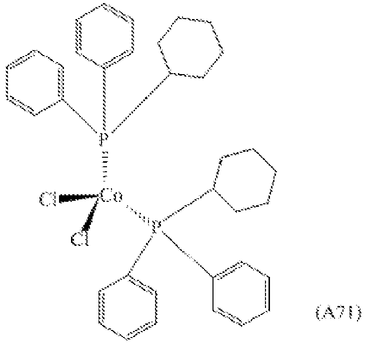

Cobalt dichloride (CoCl₂) anhydrous (1.0652 g, 8.2 mmoles) and 60 ml of ethanol were placed in a 100 ml flask: the blue solution obtained was kept under stirring (500 rpm), at ambient temperature, for 1 hour. Subsequently, cyclohexyldiphenylphosphine (4.854 g, 18.1 mmoles) dissolved in ethanol (60 ml) were added: everything was kept, under stirring (500 rpm), at ambient temperature, for 24 hours. Subsequently, the blue suspension obtained was filtered and the residue obtained was washed with ethanol (2 x 10 ml) and with pentane (2 x 10 ml) and vacuum dried, at ambient temperature, obtaining 4.738 g of a solid product corresponding to the complex CoCl₂(PPh₂Cy) equal to an 86.7% conversion with respect to the cobalt dichloride (CoCl₂) anhydrous loaded.
Elementary analysis [found (calculated for C₄₄H₅₈Cl₂CoP₂]: C: 65.0% (64.87%); H: 6.40% (6.35%); Cl: 10.5% (10.64%); P: 9.20% (9.29%); Co: 9.0% (8.84%).
Molecular weight: 666.51.

### EXAMPLE 11 (comparative)

2 ml of 1,3-butadiene equal to about 1.4 g were condensed, cold (-20°C), in a 25 ml test tube. Subsequently, 14 ml of toluene were added and the temperature of the solution thus obtained was brought to +20°C. Then, methylaluminoxane (MAO) in toluene solution (0.315 ml; 5x10⁻⁴ moles, equal to about 0.029 g) was added, and, subsequently, the CoCl₂(PPh₂Cy) complex [sample A71] (1.67 ml of toluene solution at concentration of 2 mg/ml; 5x10⁻⁶ moles, equal to about 3.34 mg) obtained as described in Example 10 (comparative). Everything was kept under magnetic stirring, at +20°C, for 16 minutes.

The polymerization was then stopped by adding 2 ml of methanol containing some drops of hydrochloric acid. The polymer obtained was then coagulated by adding 40 ml of a methanol solution containing 4% of Irganox® 1076 antioxidant (Ciba) obtaining 1.4 g of polybutadiene: further characteristics of the process and of the polybutadiene obtained are reported in Table 3.

**TABLE 1**

| | |
|---|---|
| Crystallographic data, Data collection details and results of refinement for the complex CoCl₂(P*^{t}*BuPh₂) (Example 1) (I) | |

| | (I) |
|---|---|
| formula, *M*ᵣ | C₃₂H₃₈Cl₂CoP₂, 614.39 |
| crystal system | Monoclinic |
| space group, Z | *P*2₁/*n*, 4 |
| *D*_{calc}, g cm⁻³ | 1,347 |
| a, Å | 11.9782(5) |
| *b,* Å | 15.4120(6) |
| *c*, Å | 16.7851 (7) |
| *α*, ° | 90 |
| *β*, ° | 102,098(1) |
| *γ*, ° | 90 |
| *V*, Å³ | 3029.8(2) |
| crystal size, mm | 0.35×0.20×0.08 |
| color, habit | light blue, plate |
| *µ,* mm⁻¹ | 0,868 |
| radiation | MoK_{α} |
| *T,* K | 153(2) |
| 2 *θ*ₘₐₓ, ° | 63.69 -17→17; -22→22; |
| *h, k, l* ranges | -24→24 |
| intensity decay, % | 00:00 |
| adsorption correction | multi-scan |
| *T*ₘᵢₙ, *T*ₘₐₓ | 0.682, 0.746 |
| measured reflections | 60180 |
| Rᵢₙₜ | 0.0320 |
| independent reflections | 9958 |
| reflections with *l*>2σ(/) | 8422 |
| no. of parameters | 340 |
| *R, wR*[*F*²>2*σ*(*F*²)] | 0.0353, 0.0900 |
| goodness of fit | 1.048 |
| Δ*ρ*ₘₐₓ, Δ*ρ*ₘᵢₙ (eÅ⁻³) | 1.069, -0.231 |

**TABLE 2**

| Bond lengths (Å) and Angles (°) selected for the complex CoCl₂(P*^{t}*BuPh₂) (Example 1) (I)^{(a)} | |
|---|---|
| | (I) |
| Co-Cm | 2.2356(4) |
| Co-P | 2.4334(4) |
| P-Cₐᵣ | 1.8260(14) |
| P-C_{alif} | 1.8878(14) |
| Cl-Co-Cl | 112.41 (2) |
| P-Co-P | 113.69(1) |
| Cₐᵣ-P-Cₐᵣ | 107.92(6) |
| Cₐᵣ-P-C_{alif} | 104.83(6) |

| | |
|---|---|
| ^{(a)}: each value reported was obtained as the mean of all the corresponding parameters present in the structure. | |

**TABLE 3**

| | | | | | | | | | | |
|---|---|---|---|---|---|---|---|---|---|---|
| Polymerization of 1,3-butadiene with catalytic systems comprising complexes of cobalt with phosphine ligands | | | | | | | | | | |

| Example | Al/Co (molar ratio) | Amb. (°C) | Time (min) | Conversion (%) | 1,4-cis (%) | 1.2 (%) | [(*rr*) %]^{(*2*)} | M_{w}⁽³⁾ (gxmol⁻¹) | M_{w}/Mₙ⁽⁴⁾ | Tₘ⁽⁵⁾ (°C) |
|---|---|---|---|---|---|---|---|---|---|---|
| 3 | 100 | +20 | 10 | 100 | 14 | 85.4 | 79.5 | 175600 | 2.4 | 140.9 |
| 4 | 10 | +20 | 30 | 100 | 14.4 | 85.6 | 80.6 | 197000 | 2.2 | 146.3 |
| 5⁽¹⁾ | 10 | +20 | 60 | 100 | 9.2 | 90.8 | 82.3 | 186700 | 2.1 | 153.5 |
| 6⁽¹⁾ | 25 | 0 | 60 | 100 | 5.6 | 94.2 | 84.1 | 225600 | 1.9 | 158.2 |
| 7 | 100 | +20 | 15 | 100 | 15.2 | 86.0 | 81.3 | 203400 | 2.3 | 141.8 |
| 8⁽¹⁾ | 25 | +20 | 60 | 100 | 11.7 | 88.3 | 83.7 | 196000 | 2.1 | 154.7 |
| 9⁽¹⁾ | 25 | 0 | 10 | 72 | 5.6 | 94.5 | 85.5 | 237200 | 2.0 | 160.8 |
| 11⁽⁶⁾ | 100 | +20 | 16 | 100 | 15.5 | 84.5 | 69.0 | 172000 | 2.4 | 109.0 |

| | | | | | | | | | | |
|---|---|---|---|---|---|---|---|---|---|---|
| ⁽¹⁾: polymerization solvent heptane; ⁽²⁾: syndiotactic triad content in the polybutadiene obtained; ⁽³⁾: weight average molecular weight (M_{w}); ⁽⁴⁾: Polydispersion Index (PDI); ⁽⁵⁾: Tₘ = melting point; ⁽⁶⁾: comparative example. | | | | | | | | | | |

## Claims

1. Process for the preparation of 1,2 syndiotactic polybutadiene comprising polymerizing 1,3-butadiene in the presence of a catalytic system comprising:
- at least one cobalt complex with a phosphine ligand having general formula (I): 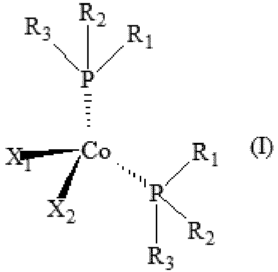 wherein:
- R₁, R₂ and R₃, mutually identical or different, are selected from , branched C₄-C₂₀ alkyl groups, preferably C₄-C₁₅, C₆-C₃₀cycloalkyl groups, preferably C₆-C₁₅, said cycloalkyl groups being substituted, C₆-C₃₀ aryl groups, preferably C₆-C₁₅, optionally substituted; provided that at least two of R₁, R₂ and R₃ are selected from C₆-C₃₀ aryl groups, preferably C₆-C₁₅, optionally substituted;
- X₁ and X₂, mutually identical or different, represent a halogen atom such as chlorine, bromine, iodine;
- at least one aluminoxane having general formula (II):
(R₄)₂-Al-O-[-Al(R₅)-O-]ₘ-Al-(R₆)₂ (II)
wherein R₄, R₅ and R₆, mutually identical or different, represent a hydrogen atom or a halogen atom such as chlorine, bromine, iodine, fluorine; or are selected from linear or branched C₁-C₂₀ alkyl groups, cycloalkyl groups, aryl groups, said groups being optionally substituted with one or more silicon or germanium atoms; and m is an integer ranging from 0 to 1000;
said process being carried out at a temperature ranging from 0°C to +60° C, preferably ranging from 0°C to +30°C.

2. Process for the preparation of 1,2-syndiotactic polybutadiene according to claim 1, wherein in said cobalt complex with a phosphine ligand having general formula (I):
- R₁ is selected from branched C₄-C₂₀ alkyl groups, preferably C₄-C₁₅, or from C₆-C₃₀cycloalkyl groups, preferably C₆-C₁₅, said cycloalkyl groups being substituted; preferably, is a *tert*-butyl group or a 2-*iso-*propyl-5-methyl-cyclohexyl group (neomenthyl);
- R₂ e R₃, mutually identical, are selected from C₆-C₃₀aryl groups, preferably C₆-C₁₅, optionally substituted; preferably they represent a phenyl group;
- X₁ and X₂, mutually identical, represent a halogen atom such as chlorine, bromine, iodine; preferably they represent a chlorine atom.

3. Process for the preparation of 1,2-syndiotactic polybutadiene according to claim 1 or 2, wherein said aluminoxane having general formula (II) is selected from: methylaluminoxane (MAO), ethylaluminoxane, *n-*butylaluminoxane, tetra-*iso*-buthylaluminoxane (TIBAO), *tert-*butylaluminoxane, tetra(2,4,4-trimethylpentyl)aluminoxane (TIOAO), tetra-(2,3-dimethylbutyl)aluminoxane (TDMBAO), tetra-(2,3,3-trimethylbutyl)aluminoxane (TTMBAO), or mixtures thereof; preferably it is methylaluminoxane (MAO).

4. Process for the preparation of 1,2-syndiotactic polybutadiene according to any one of the preceding claims, wherein:
- said process is carried out in the presence of at least one inert organic solvent selected from: saturated aliphatic hydrocarbons such as butane, pentane, hexane, heptane, or mixtures thereof; saturated cycloaliphatic hydrocarbons such as cyclopentane, cyclohexane, or mixtures thereof; mono-olefins such as 1-butene, 2-butene, or mixtures thereof; aromatic hydrocarbons such as benzene, toluene, xylene, or mixtures thereof; halogenated hydrocarbons such as methylene chloride, chloroform, carbon tetrachloride, trichloroethylene, perchlorethylene, 1,2-dichloroethane, chlorobenzene, bromobenzene, chlorotoluene, or mixtures thereof; preferably hexane, heptane, toluene; and/or
- in said process, the concentration of 1,3-butadiene in said inert organic solvent is ranging from 5% by weight to 50% by weight, preferably ranging from 10% by weight to 20% by weight, with respect to the total weight of the mixture of 1,3-butadiene and inert organic solvent.

5. Cobalt complex with a phosphine ligand having general formula (I) 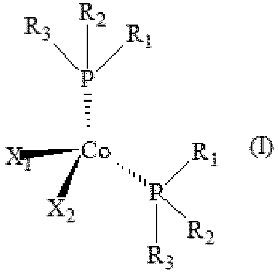 wherein:
- R₁ is selected from branched C₄-C₂₀ alkyl groups, preferably C₄-C₁₅, or from C₆-C₃₀cycloalkyl groups, preferably C₆-C₁₅, said cycloalkyl groups being substituted; preferably, is a *tert*-butyl group or a 2-*iso-*propyl-5-methyl-cyclohexyl group (neomenthyl);
- R₂ and R₃, mutually identical, are selected from C₆-C₃₀aryl groups, preferably C₆-C₁₅, optionally substituted; preferably they represent a phenyl group;
- X₁ and X₂, mutually identical, represent a halogen atom such as chlorine, bromine, iodine; preferably they represent a chlorine atom.

## Patentansprüche

1. Verfahren zur Herstellung eines 1,2-syndiotaktischen Polybutadiens, welches das Polymerisieren von 1,3-Butadien in der Gegenwart eines katalytischen Systems umfasst, das umfasst:
- mindestens einen Kobaltkomplex mit einem Phosphinliganden, der die allgemeine Formel (I) aufweist: 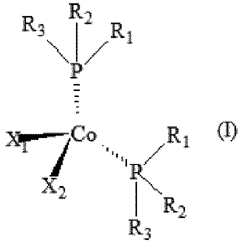 worin:
- R₁, R₂ und R₃, die identisch oder verschieden sind, aus verzweigten C₄-C₂₀-Alkylgruppen, vorzugsweise C₄-C₁₅-, C₆-C₃₀-Cycloalkylgruppen, vorzugsweise C₆-C₁₅-, wobei die Cycloalkylgruppen substituiert sind, C₆-C₃₀-Arylgruppen, vorzugsweise C₆-C₁₅-, die gegebenenfalls substituiert sind, ausgewählt sind;
mit der Maßgabe, dass mindestens zwei von R₁, R₂ und R₃ aus C₆-C₃₀-Arylgruppen, vorzugsweise C₆-C₁₅-, die gegebenenfalls substituiert sind, ausgewählt sind;
- X₁ und X₂, die identisch oder verschieden sind, ein Halogenatom, wie z.B. Chlor, Brom, Iod, darstellen;
- mindestens ein Aluminoxan mit der allgemeinen Formel (II):
(R₄)₂-Al-O-[-Al(R₅)-O-]ₘ-Al-(R₆)₂ (II)
worin R₄, R₅ und R₆, die identisch oder verschieden sind, ein Wasserstoffatom oder ein Halogenatom, wie z.B. Chlor, Brom, Iod, Fluor, darstellen; oder aus unverzweigten oder verzweigten C₁-C₂₀-Alkylgruppen, Cycloalkylgruppen, Arylgruppen ausgewählt sind, wobei die Gruppen gegebenenfalls mit einem oder mehreren Silizium- oder Germaniumatom(en) substituiert sind; und m eine ganze Zahl im Bereich von 0 bis 1000 ist;
wobei das Verfahren bei einer Temperatur im Bereich von 0 °C bis +60 °C, vorzugsweise im Bereich von 0 °C bis +30 °C, durchgeführt wird.

2. Verfahren zur Herstellung eines 1,2-syndiotaktischen Polybutadiens nach Anspruch 1, wobei in dem Kobaltkomplex mit einem Phosphinliganden, der die allgemeine Formel (I) aufweist:
- R₁ aus verzweigten C₄-C₂₀-Alkylgruppen, vorzugsweise C₄-C₁₅-, oder aus C₆-C₃₀-Cycloalkylgruppen, vorzugsweise C₆-C₁₅-, ausgewählt ist, wobei die Cycloalkylgruppen substituiert sind, vorzugsweise eine tert-Butylgruppe oder eine 2-Isopropyl-5-methylcyclohexylgruppe (Neomenthyl) ist;
- R₂ und R₃, die identisch sind, aus C₆-C₃₀-Arylgruppen, vorzugsweise C₆-C₁₅-, die gegebenenfalls substituiert sind, ausgewählt sind; wobei sie vorzugsweise eine Phenylgruppe darstellen;
- X₁ und X₂, die identisch sind, ein Halogenatom, wie z.B. Chlor, Brom, Iod, darstellen; wobei sie vorzugsweise ein Chloratom darstellen.

3. Verfahren zur Herstellung eines 1,2-syndiotaktischen Polybutadiens nach Anspruch 1 oder 2, wobei das Aluminoxan mit der allgemeinen Formel (II) ausgewählt ist aus: Methylaluminoxan (MAO), Ethylaluminoxan, n-Butylaluminoxan, Tetra-iso-butylaluminoxan (TIBAO), tert-Butylaluminoxan, Tetra(2,4,4-trimethylpentyl)aluminoxan (TIOAO), Tetra(2,3-dimethylbutyl)aluminoxan (TDMBAO), Tetra(2,3,3-trimethylbutyl)aluminoxan (TTMBAO) oder Gemischen davon; wobei es vorzugsweise Methylaluminoxan (MAO) ist.

4. Verfahren zur Herstellung eines 1,2-syndiotaktischen Polybutadiens nach einem der vorhergehenden Ansprüche, wobei:
- das Verfahren in der Gegenwart von mindestens einem inerten organischen Lösungsmittel, ausgewählt aus: gesättigten aliphatischen Kohlenwasserstoffen, wie z.B. Butan, Pentan, Hexan, Heptan oder Gemischen davon; gesättigten cycloaliphatischen Kohlenwasserstoffen, wie z.B. Cyclopentan, Cyclohexan oder Gemischen davon; Monoolefinen, wie z.B. 1-Buten, 2-Buten oder Gemischen davon; aromatischen Kohlenwasserstoffen, wie z.B. Benzol, Toluol, Xylol oder Gemischen davon; halogenierten Kohlenwasserstoffen, wie z.B. Methylenchlorid, Chloroform, Kohlenstofftetrachlorid, Trichlorethylen, Perchlorethylen, 1,2-Dichlorethan, Chlorbenzol, Brombenzol, Chlortoluol oder Gemischen davon; vorzugsweise Hexan, Heptan, Toluol, durchgeführt wird; und/oder
- in dem Verfahren die Konzentration von 1,3-Butadien in dem inerten organischen Lösungsmittel im Bereich von 5 Gew.-% bis 50 Gew.-%, vorzugsweise im Bereich von 10 Gew.-% bis 20 Gew.-%, bezogen auf das Gesamtgewicht des Gemischs aus 1,3-Butadien und inertem organischen Lösungsmittel, liegt.

5. Kobaltkomplex mit einem Phosphinliganden, der die allgemeine Formel (I) 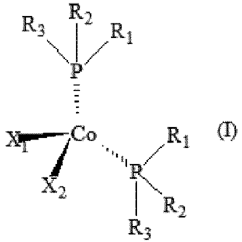 aufweist, worin:
- R₁ aus verzweigten C₄-C₂₀-Alkylgruppen, vorzugsweise C₄-C₁₅-, oder aus C₆-C₃₀-Cycloalkylgruppen, vorzugsweise C₆-C₁₅-, ausgewählt ist, wobei die Cycloalkylgruppen substituiert sind; vorzugsweise eine tert-Butylgruppe oder eine 2-Isopropyl-5-methylcyclohexylgruppe (Neomenthyl) ist;
- R₂ und R₃, die identisch sind, aus C₆-C₃₀-Arylgruppen, vorzugsweise C₆-C₁₅-, die gegebenenfalls substituiert sind, ausgewählt sind; wobei sie vorzugsweise eine Phenylgruppe darstellen;
- X₁ und X₂, die identisch sind, ein Halogenatom, wie z.B. Chlor, Brom, Iod, darstellen; wobei sie vorzugsweise ein Chloratom darstellen.

## Revendications

1. Procédé de préparation de 1,2-polybutadiène syndiotactique comprenant la polymérisation du 1,3-butadiène en présence d'un système catalytique comprenant :
- au moins un complexe de cobalt avec un ligand phosphine ayant la formule générale (I) : 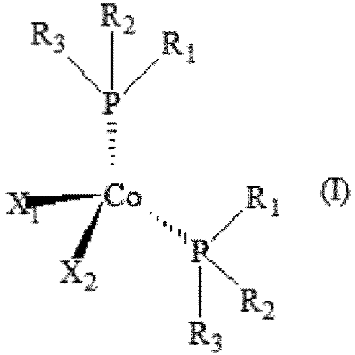 dans laquelle :
- R₁, R₂ et R₃, mutuellement identiques ou différents, sont choisis parmi les groupes alkyles en C₄ à C₂₀ ramifiés, de préférence en C₄ à C₁₅, les groupes cycloalkyles en C₆ à C₃₀, de préférence en C₆ à C₁₅, lesdits groupes cycloalkyles étant substitués, les groupes aryles en C₆ à C₃₀, de préférence en C₆ à C₁₅, éventuellement substitués ;
à condition qu'au moins deux des R₁, R₂ et R₃ soient choisis parmi les groupes aryles en C₆ à C₃₀, de préférence en C₆ à C₁₅, éventuellement substitués ;
- X₁ et X₂, mutuellement identiques ou différents, représentent un atome d'halogène tel qu'un atome de chlore, de brome, d'iode ;
- au moins un aluminoxane ayant la formule générale (II) :
(R₄)₂-Al-O-[-Al(R₅)-O-]ₘ-Al-(R₆)₂ (II)
dans laquelle R₄, R₅ et R₆, mutuellement identiques ou différents, représentent un atome d'hydrogène ou un atome d'halogène tel qu'un atome de chlore, de brome, d'iode, de fluor ; ou sont choisis parmi les groupes alkyles en C₁ à C₂₀ linéaires ou ramifiés, les groupes cycloalkyles, les groupes aryles, lesdits groupes étant éventuellement substitués par un ou plusieurs atomes de silicium ou de germanium ; et m est un nombre entier compris dans la plage allant de 0 à 1 000 ; ledit procédé étant mis en œuvre à une température
comprise dans la plage allant de 0 °C à +60 °C, de préférence comprise dans la plage allant de 0 °C à +30 °C.

2. Procédé de préparation de 1,2-polybutadiène syndiotactique selon la revendication 1, dans lequel dans ledit complexe de cobalt avec un ligand phosphine ayant la formule générale (I) :
- R₁ est choisi parmi les groupes alkyles en C₄ à C₂₀ ramifiés, de préférence en C₄ à C₁₅, ou parmi les groupes cycloalkyles en C₆ à C₃₀, de préférence en C₆ à C₁₅, lesdits groupes cycloalkyles étant substitués ; de préférence est un groupe tert-butyle ou un groupe 2-*iso*-propyl-5-méthyl-cyclohexyle (néomenthyle) ;
- R₂ et R₃, mutuellement identiques, sont choisis parmi les groupes aryles en C₆ à C₃₀, de préférence en C₆ à C₁₅, éventuellement substitués ; de préférence ils représentent un groupe phényle ;
- X₁ et X₂, mutuellement identiques, représentent un atome d'halogène tel qu'un atome de chlore, de brome, d'iode ; de préférence ils représentent un atome de chlore.

3. Procédé de préparation de 1,2-polybutadiène syndiotactique selon la revendication 1 ou 2, dans lequel ledit aluminoxane ayant la formule générale (II) est choisi parmi : le méthylaluminoxane (MAO), l'éthylaluminoxane, le n-butylaluminoxane, le tétra-*iso*-buthylaluminoxane (TIBAO), le *tert*-butylaluminoxane, le tétra(2,4,4-triméthylpentyl)aluminoxane (TIOAO), le tétra-(2,3-diméthylbutyl)aluminoxane (TDMBAO), le tétra-(2,3,3-triméthylbutyl)aluminoxane (TTMBAO), ou des mélanges de ceux-ci ; de préférence c'est le méthylaluminoxane (MAO).

4. Procédé de préparation de 1,2-polybutadiène syndiotactique selon l'une quelconque des revendications précédentes, dans lequel :
- ledit procédé est mis en œuvre en présence d'au moins un solvant organique inerte choisi parmi : les hydrocarbures aliphatiques saturés tels que le butane, le pentane, l'hexane, l'heptane ou des mélanges de ceux-ci ; les hydrocarbures cycloaliphatiques saturés tels que le cyclopentane, le cyclohexane ou des mélanges de ceux-ci ; les mono-oléfines telles que le 1-butène, le 2-butène ou des mélanges de ceux-ci ; les hydrocarbures aromatiques tels que le benzène, le toluène, le xylène ou des mélanges de ceux-ci ; les hydrocarbures halogénés tels que le chlorure de méthylène, le chloroforme, le tétrachlorure de carbone, le trichloréthylène, le perchloréthylène, le 1,2-dichloroéthane, le chlorobenzène, le bromobenzène, le chlorotoluène ou des mélanges de ceux-ci ; de préférence l'hexane, l'heptane, le toluène ; et/ou
- dans ledit procédé, la concentration en 1,3-butadiène dans ledit solvant organique inerte est comprise dans la plage allant de 5 % en poids à 50 % en poids, de préférence comprise dans la plage allant de 10 % en poids à 20 % en poids, par rapport au poids total du mélange de 1,3-butadiène et de solvant organique inerte.

5. Complexe de cobalt avec un ligand phosphine ayant la formule générale (I) : 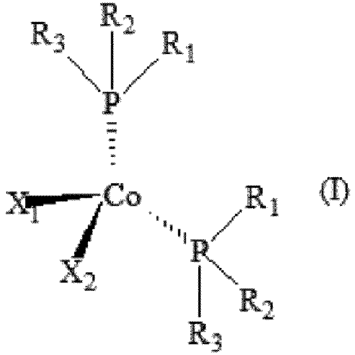 dans laquelle :
- R₁ est choisi parmi les groupes alkyles en C₄ à C₂₀ ramifiés, de préférence en C₄ à C₁₅, ou les groupes cycloalkyles en C₆ à C₃₀, de préférence en C₆ à C₁₅, lesdits groupes cycloalkyles étant substitués ; de préférence est un groupe tert-butyle ou un groupe 2-*iso*-propyl-5-méthyl-cyclohexyle (néomenthyle) ;
- R₂ et R₃, mutuellement identiques, sont choisis parmi les groupes aryles en C₆ à C₃₀, de préférence en C₆ à C₁₅, éventuellement substitués ; de préférence ils représentent un groupe phényle ;
- X₁ et X₂, mutuellement identiques, représentent un atome d'halogène tel qu'un atome de chlore, de brome, d'iode ; de préférence ils représentent un atome de chlore.
